# EUROPEAN PATENT APPLICATION

(11) **EP 3 425 887 A1**
(43) Date of publication of application: **09.01.2019**
(21) Application number: 17870676.8
(22) Date of filing: 21.11.2017
(51) Int. Cl.: H04M 1/11

(54) **HINGE**

(30) Priority: 21.11.2016 JP 2016237988; 04.01.2017 JP 2017008966; 30.01.2017 JP 2017025418; 31.08.2017 JP 2017166695
(71) Applicant: Hatanaka, Satoshi, Toda-shi, Saitama 335-0025 (JP)
(72) Inventor: Hatanaka, Satoshi, Toda-shi, Saitama 335-0025 (JP)
(74) Representative: Grünecker Patent- und Rechtsanwälte PartG mbB
(86) International application number: PCT/JP2017/041883
(87) International publication number: WO 2018/092917

(57) **Abstract**

The present invention addresses the problem of providing a hinge that has an automatically "closing" function using a simple structure. In order to solve this problem, the present invention provides a hinge comprising a first member, a second member, and a curved part that connects the first member and the second member and pivots the first member or the second member, wherein the curved part includes a silicone rubber that generates strain while the first member and the second member are in an opened state, and biases the first member and the second member in a closing direction.

## Description

### TECHNICAL FIELD

The present invention relates to a hinge that includes a simple structure and has an automatically closing function.

### BACKGROUND ART

Shock-absorbing protective cases and screen protection covers are mounted on some mobile phones such as smartphones so that breakage attributable to dropping or the like is prevented (see Patent Document 1).

Various types of smartphone cases are on sale nowadays, including various so-called notebook-type smartphone cases. In general, the surface cover of the notebook-type smartphone case is opened when a smartphone is operated and the surface cover is manually closed after the use.

### CITATION LIST

### PATENT DOCUMENT

Patent Document 1: JP 2014-082689 A

### SUMMARY OF THE INVENTION

### PROBLEM TO BE SOLVED BY THE INVENTION

When dropped during operation, an existing smartphone case collides with a ground surface with an operation screen exposed, and then the operation screen is likely to crack. In this regard, it is an object of the invention to provide a hinge that has an automatically "closing" function using a simple structure.

### MEANS FOR SOLVING PROBLEM

As a result of intensive studies to solve the above-mentioned problems, the inventors of the invention have found that it is possible to easily impart a "closing" function by using a specific silicone rubber for a hinge, thereby completing the invention.

In other words, the invention is as follows.

A hinge according to the invention for solving the above-mentioned problems includes a first member, a second member, and a curved part linearly connecting the first member and the second member and allowing the first member and/or the second member to pivot by using a line direction of the connection as an axial direction. The curved part includes a silicone rubber. The silicone rubber generates strain in an opened state where the first member and the second member are opened and biases the first member and the second member in a closing direction. A mass of the first member and/or the second member is smaller than stress biasing the first member and the second member in the closing direction in an opened state where the first member and the second member are opened by 180°.

In the hinge according to the invention, strain is generated in the silicone rubber incorporated in the curved part in a state where the first member and the second member are manually opened, and then the first member and the second member are biased in the closing direction. In addition, the mass of the first member and/or the second member is smaller than the stress biasing the first member and the second member in the closing direction. As a result, when a hand is released, automatic closing of the first member and/or the second member is achieved as an effect.

In addition, since the silicone rubber is excellent in durability against deformation and light resistance against light such as ultraviolet rays, the silicone rubber is unlikely to deteriorate even in the event of repeated opening and closing and outdoor use and can be used for a long period of time.

Further, in one embodiment of the hinge according to the invention, the mass of at least one of the first member and the second member is larger than the stress.

According to this feature, the mass of at least one of the first member and the second member is larger than the stress biasing the first member and the second member in the closing direction. Accordingly, when the first member and the second member are in a state of being opened by 360°, for example, pressing is performed by the weight of the member having the mass larger than the stress, and thus the opened state can be maintained even in a state where a hand is released.

Further, in one embodiment of the hinge according to the invention, the stress is 1 to 100 g.

Easy manual opening is not possible when the stress biasing the first member and the second member in the closing direction is excessively large. Accordingly, by setting the stress to 1 to 100 g, opening can be easily performed with the weak force of a fingertip or the like, and it is possible to provide a hinge excellent in usability.

Further, in one embodiment of the hinge according to the invention, the silicone rubber is made of a silicone rubber tube having a substantially arcuate cross section.

By using the silicone rubber tube having the substantially arcuate cross section, a load attributable to strain is applied across the entire silicone rubber when the silicone rubber is deformed by opening of the first member and the second member. Therefore, more durability is achieved than with a shape in which the load of strain is locally applied as in, for example, a silicone rubber tube with a polygonal cross section.

Further, in one embodiment of the hinge according to the invention, the silicone rubber tube has an outer diameter of 6 to 20 mm and a thickness of 0.5 to 5 mm.

According to this feature, an appropriate stress is given, and thus opening can be easily performed with a weak force and a hinge excellent in usability can be realized.

Further, in one embodiment of the hinge according to the invention, an opening angle of the substantially arcuate cross section is 0 to 90°.

According to this feature, the first member and the second member can be closed until the members abut against each other.

### EFFECT OF THE INVENTION

According to the invention, a hinge that has an automatically "closing" function using a simple structure can be provided.

### BRIEF DESCRIPTION OF DRAWINGS

Fig. 1 is a schematic explanatory view illustrating a structure of a hinge according to an example of the invention;
Fig. 2 is a perspective view illustrating an example of the shape of a silicone rubber according to the example of the invention;
Fig. 3 is a diagram illustrating an example of the shape of a cross section of the silicone rubber according to the invention;
Fig. 4 is a schematic diagram of a "reaction force" measurement device used in an experiment;
Fig. 5 is graphs of "reaction force" measurement results from the experiment ((a): relationship between reaction force and cross-sectional area of elastic body, (b) and (c): relationship between reaction force and opening angle of elastic body);
Fig. 6 is a perspective view of a first application example (smartphone case) of the hinge according to the invention;
Fig. 7 is a cross-sectional view of a part of a curved part of the first application example (smartphone case) of the hinge according to the invention;
Fig. 8 is a perspective view of a second application example (hand mirror) of the hinge according to the invention;
Fig. 9 is a perspective view of a third application example (business card holder) of the hinge according to the invention;
Fig. 10 is a perspective view of a fourth application example (coin purse) of the hinge according to the invention;
Fig. 11 is a perspective view of a fifth application example (portable ashtray) of the hinge according to the invention; and
Fig. 12 is a perspective view of a sixth application example (water bottle) of the hinge according to the invention.

### MODE(S) FOR CARRYING OUT THE INVENTION

Hereinafter, a hinge according to one aspect of the invention will be described with reference to accompanying drawings and specific embodiments. The invention is not limited to the following forms.

A hinge according to the invention includes a first member, a second member, and a curved part linearly connecting the first member and the second member and allowing the first member and/or the second member to pivot by using a line direction of the connection as an axial direction. The curved part includes a silicone rubber. The silicone rubber generates strain in an opened state where the first member and the second member are opened and biases the first member and the second member in a closing direction. A mass of the first member and/or the second member is smaller than stress biasing the first member and the second member in the closing direction in an opened state where the first member and the second member are opened by 180° (hereinafter, simply referred to as "stress" in some cases).

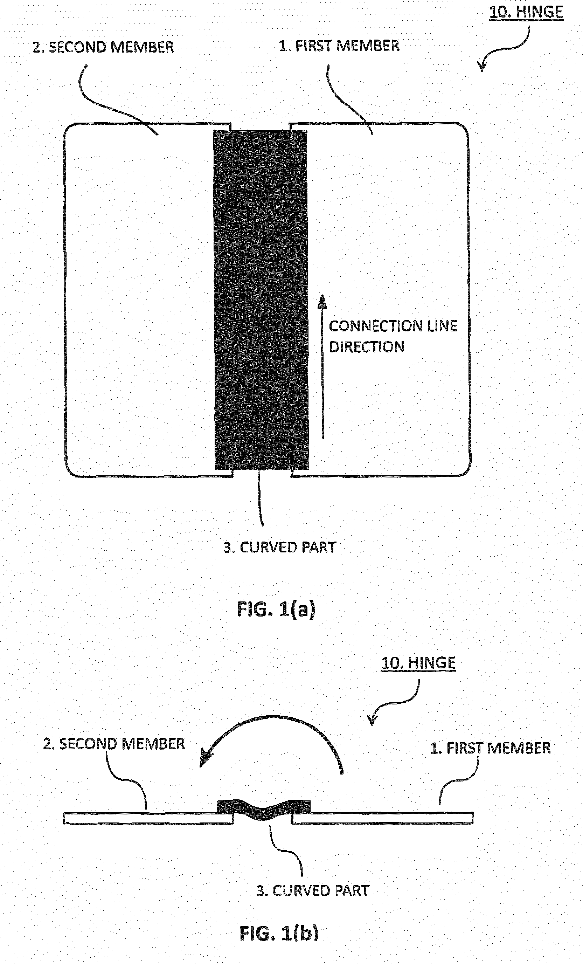

Fig. 1 is a schematic explanatory view illustrating a hinge 10 according to the invention. Fig. 1(a) is a plan view and Fig. 1(b) is a side view. The hinge 10 according to the invention includes a first member 1, a second member 2, and a curved part 3 linearly connecting the first member 1 and the second member 2. The curved part 3 is attached such that the first member 1 and the second member 2 pivot with the connection line direction illustrated in Fig. 1(a) used as an axial direction. The hinge 10 illustrated in Fig. 1 is a diagram illustrating a state where the first member 1 and the second member 2 are opened by 180° and is biased in a direction in which the first member 1 and the second member 2 are closed (arrow direction illustrated in Fig. 1(b)).

A silicone rubber tube having a substantially arcuate cross section is used for the curved part 3, and the first member and the second member are fixed along the longitudinal direction of the silicone rubber tube. It should be noted that the first member and the second member are fixed to the outer peripheral surface side of the silicone rubber tube by means of an adhesive for a hardly adhesive material.

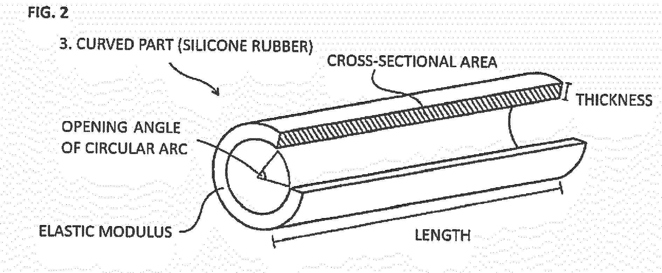

Fig. 2 is a schematic explanatory view of the silicone rubber tube used for the curved part 3. This silicone rubber tube is obtained by cutting out a part of a tube and has a substantially arcuate cross section. The opening angle of the arcuate cross-sectional shape including a tube-cut region is not particularly limited. Preferably, the opening angle is 0 to 90° or 180°. It should be noted that the opening angle of 0° means that only a cut is made in the tube and no part of the tube is cut out. By setting the angle to 90° or less, the first member and the second member can be further closed. From the viewpoint of more reliable closing, the angle is preferably 60° or less, more preferably 30° or less, and particularly preferably 0°. In addition, in the case of 180°, it is possible to use a tube cut in half, and thus it is possible to manufacture two curved parts from one tube and the yield increases.

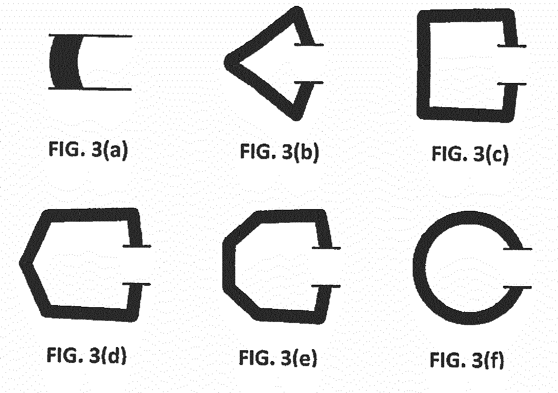

The shape of the silicone rubber is not particularly limited insofar as strain is generated from deformation and the first member and the second member are biased in the closing direction. Examples of the shape include a columnar shape connecting the inside surfaces of the first member and the second member as illustrated in (a) of Fig. 3 and a scissors shape sandwiching the outside surfaces of the first member and the second member as illustrated in (b) to (f) of Fig. 3. Examples of the scissors shape include a polygonal shape such as a triangular shape, a quadrangular shape, a pentagonal shape, and a hexagonal shape (see (b) to (e) of Fig. 3); and an arcuate shape (see (f) of Fig. 3). The silicone rubber tube having the substantially arcuate cross section is preferable from the viewpoint of excellent durability and zero local load application during strain generation.

The size of the silicone rubber tube is not particularly limited. As an example, one having an outer diameter of 6 to 20 mm and a thickness of 0.5 to 5 mm is used. When a silicone rubber tube of this size is used, the curved part 3 has an appropriate stress, and thus opening can be easily performed with a weak force and a hinge excellent in usability can be realized. The lower limit value of the outer diameter is preferably 7 mm or more and more preferably 8 mm or more. The upper limit value of the outer diameter is preferably 15 mm or less, more preferably 13 mm or less, and particularly preferably 11 mm or less. The lower limit value of the thickness is preferably 1 mm or more. The upper limit of the thickness is preferably 3 mm or less and more preferably 2 mm or less.

The length of the silicone rubber tube is not particularly limited. For example, the length is 10 to 300 mm. The lower limit value of the length is preferably 20 mm or more, more preferably 50 mm or more, and particularly preferably 100 mm or more. The upper limit value of the length is preferably 200 mm or less and more preferably 180 mm or less.

The hardness of the silicone rubber is not particularly limited. For example, one having a hardness of 10 to 90 is used. The lower limit value of the hardness is preferably 20 or more, more preferably 40 or more, and particularly preferably 50 or more. The upper limit value of the hardness is preferably 80 or less and more preferably 60 or less. It should be noted that the hardness of the silicone rubber is measured by means of Durometer Type A.

The mass of the first member 1 and/or the second member 2 is smaller than the stress biasing the first member and the second member in the closing direction in the opened state where the first member 1 and the second member 2 are opened by 180°. As a result, when a hand is released, automatic closing of the first member and/or the second member is achieved as an effect. In a case where the mass of the first member 1 and/or the second member 2 is smaller than the stress, the difference between the stress and the mass of the first member 1 and/or the second member 2 is preferably 10 g or more, more preferably 20 g or more, and particularly preferably 30 g or more. When the difference between the stress and the mass of the first member 1 and/or the second member 2 is set to 10 g or more, quick closing is achieved as an effect.

In addition, the mass of at least one of the first member 1 and the second member 2 may be larger than the stress biasing the first member and the second member in the closing direction in the opened state where the first member 1 and the second member 2 are opened by 180°. For example, when a member with a large mass is placed on top with the first member 1 and the second member 2 opened by 360°, the opened state can be maintained, even with a hand released, by pushing by the mass of the member. In a case where the mass of at least one of the first member 1 and the second member 2 is larger than the stress, the difference between the stress and the mass of the member is preferably 10 g or more, more preferably 20 g or more, even more preferably 30 g or more, and particularly preferably 50 g or more. When the difference between the stress and the mass of the member is 10 g or more, the opened state can be stably maintained.

Preferably, the curved part 3 according to the invention is formed such that the stress biasing the first member 1 and the second member 2 in the closing direction in the opened state where the first member 1 and the second member 2 are opened by 180° is 1 to 100 g. As a result, opening can be easily performed even with a weak force and a hinge excellent in usability can be provided. From the viewpoint of a particularly excellent usability resulting from a smooth opening and closing operation, the lower limit value of this stress is preferably 5 g or more, more preferably 10 g or more, even more preferably 20 g or more, and particularly preferably 25 g or more. Meanwhile, the upper limit value of the stress is preferably 70 g or less, more preferably 50 g or less, even more preferably 45 g or less, and particularly preferably 40 g or less.

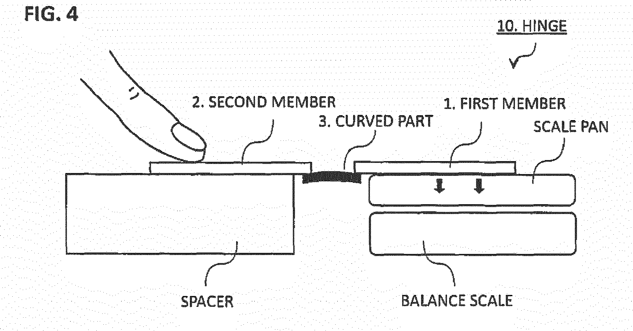

It should be noted that a device that is illustrated in Fig. 4 is used in a stress measurement method. The device illustrated in Fig. 4 is a device in which a balance scale and a scale pan are disposed apart from a spacer of the same height. As illustrated in Fig. 4, by the measurement method, the weight of the balance scale is measured (this will be referred to as a "reaction force") with the first member 1 and the second member 2 of the hinge 10 opened by 180°, one member (second member) pressed and fixed on the spacer, and the other member (first member) placed on the scale pan. The stress biasing the first member 1 and the second member 2 in the closing direction is obtained by calculating the difference between the measured reaction force and the mass of the member placed on the scale pan.

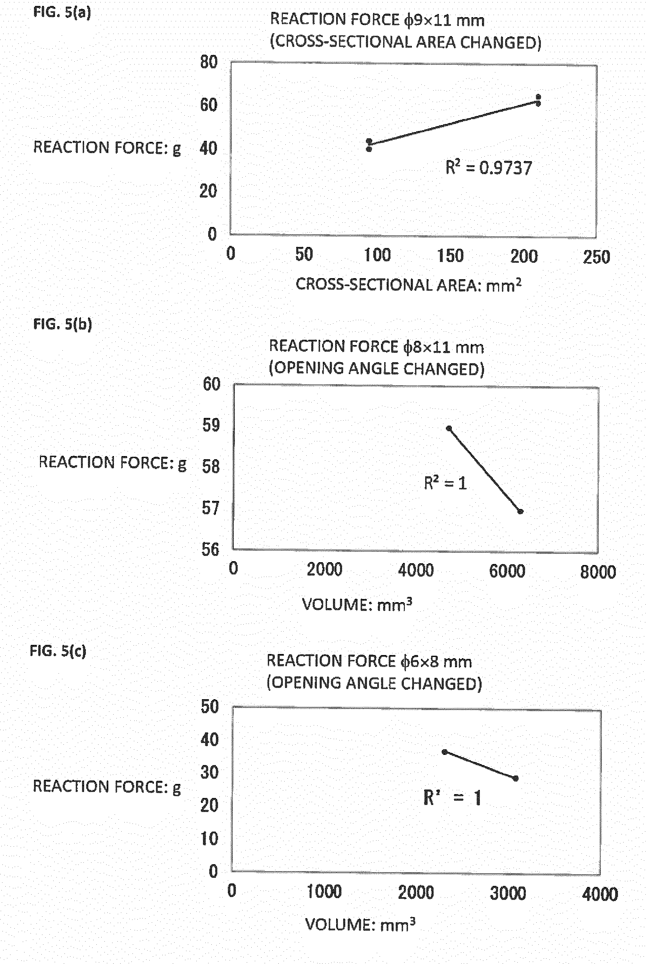

Further, adjustment of the stress biasing the first member 1 and the second member 2 in the closing direction can be adjusted by changing the cross-sectional area, the volume, and the like of the silicone rubber (see Fig. 2). For example, Fig. 5(a) illustrates a relationship between the reaction force and the cross-sectional area, and Fig. 5(b) and Fig. 5(c) illustrate a relationship between the reaction force and the volume. It should be noted that in each test example, the masses of the first member and the second member are unified. Fig. 5(a) is a reaction force measurement result in which a notched silicone rubber tube with an inner diameter of 9 mm and an outer diameter of 11 mm is used and changed in cross-sectional area by length adjustment. Fig. 5(b) is a reaction force measurement result in which a silicone rubber tube with an inner diameter of 8 mm, an outer diameter of 11 mm, and a length of 140 mm is notched and cut out in cylinder cross section by a quarter (opening angle of 90°). Fig. 5(c) is a reaction force measurement result in which a silicone rubber tube with an inner diameter of 6 mm, an outer diameter of 8 mm, and a length of 140 mm is notched and cut out in cylinder cross section by a quarter (opening angle of 90°). From these results, it can be seen that the stress biasing the first member 1 and the second member 2 in the closing direction can be adjusted as a result of adjustment of the cross-sectional area, the volume, and the like.

Application examples of the hinge according to the invention will be described below.

### <First Application Example: Smartphone Case>

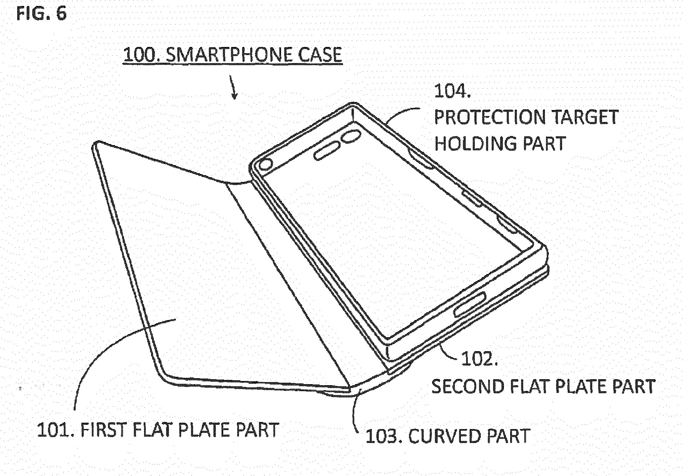

A first application example illustrated in Fig. 6 is a smartphone case 100 for protecting a smartphone. The smartphone case 100 has two flat plate parts, one being a first flat plate part 101 (first member) that covers the liquid crystal screen of the smartphone and the other being a second flat plate part 102 (second member) to which a protection target holding part 104 holding the smartphone is fixed. Further, the smartphone case 100 has a curved part 103 that linearly connects the first flat plate part 101 and the second flat plate part 102. The curved part 103 can be deformed such that the first flat plate part 101 and/or the second flat plate part 102 pivots with the connection line direction used as an axial direction.

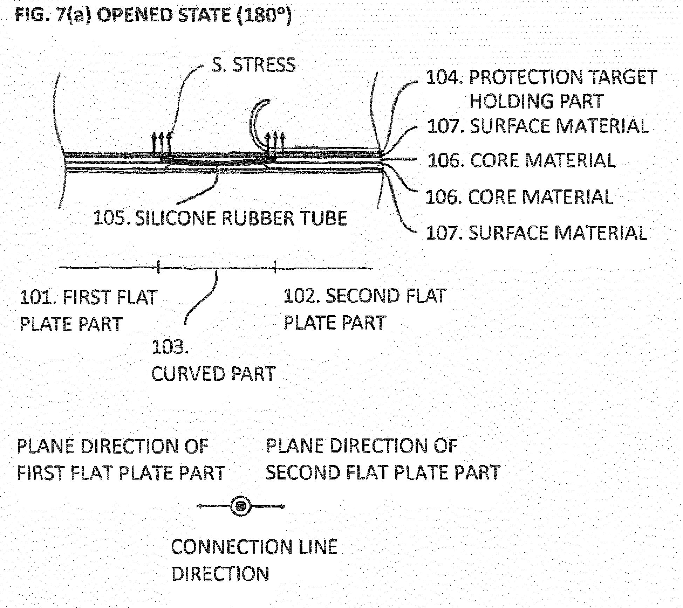

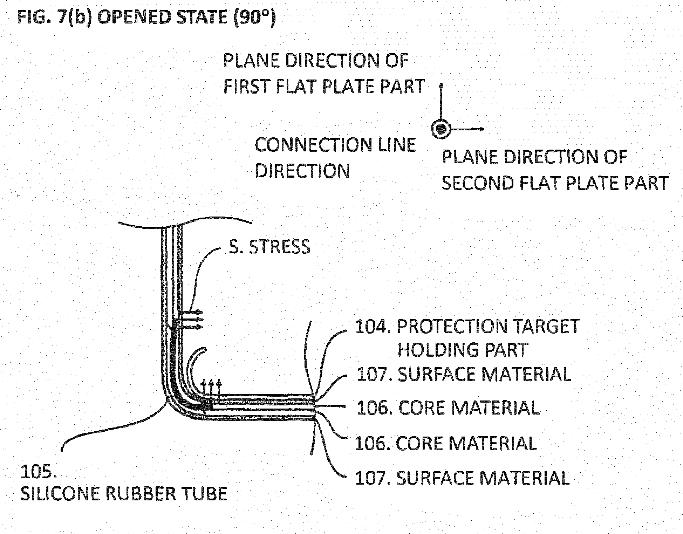

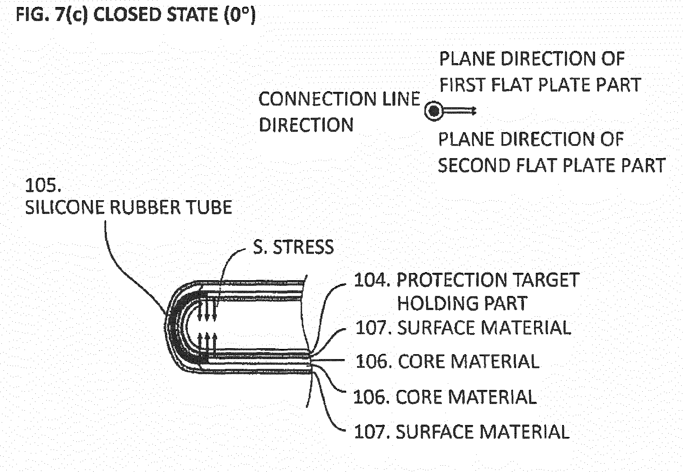

Fig. 7 is a cross-sectional view of the curved part 103 part of the smartphone case 100, in which (c) represents a closed state where each of the first flat plate part 101 and the second flat plate part 102 abuts against a protection target to sandwich the protection target (hereinafter, abbreviated as "closed state (0°)" in some cases), (b) represents an opened state where the first flat plate part 101 is pivoted by 90° from the closed state (0°) (hereinafter, abbreviated as "opened state (90°)" in some cases), and (a) represents an opened state where the first flat plate part 101 is pivoted by 180° from the closed state (0°) (hereinafter, abbreviated as "opened state (180°)" in some cases). The curved part 103 includes a silicone rubber tube 105 having an arcuate cross section. One end and the other end of the silicone rubber tube 105 are fixed by means of an adhesive for a hardly adhesive material to a plastic (polypropylene (PP)-based) core material 106 constituting the first flat plate part and the same PP-based core material 106 constituting the second flat plate part, respectively. Each of both surfaces of the silicone rubber tube 105 is covered with a flexible leather-based surface material 107 and cannot be visually recognized from the outside. The silicone rubber tube 105 is obtained by cutting a silicone rubber tube in the longitudinal direction and forming an arcuate cross section, and a state where the circular arc is closed is a zero strain state. Accordingly, in the opened state (90°) or the opened state (180°), the elastic body 105 is strained with the circular arc opened, and generates stress for the closed state (0°). It should be noted that even in the closed state (0°), the strain of the silicone rubber tube 105 remains, and a force to press the first flat plate part 101 and the second flat plate part 102 against each other is applied.

### (Experiment and Result)

The "reaction force" obtained from a silicone rubber tube having an arcuate cross section was measured by means of a smartphone case for the iPhone 7 (registered trademark).

A silicone rubber tube having the following shape and physical properties was used.
Thickness: 1 to 2 mm
Inner diameter: 6 to 8 mm
Outer diameter: 8 to 11 mm
Opening angle of circular arc: 0 to 90°
Hardness: 54 to 60
Length: 113 to 166 mm

As a result of trial smartphone case production by means of various silicone rubber tubes with different reaction forces, the closed state (0°) was automatically and quickly reached at a reaction force of 10 to 60 g. It should be noted that the mass of the first flat plate part in this trial production was 3 g, and the stress was 7 to 57 g.

### <Second Application Example: Hand Mirror>

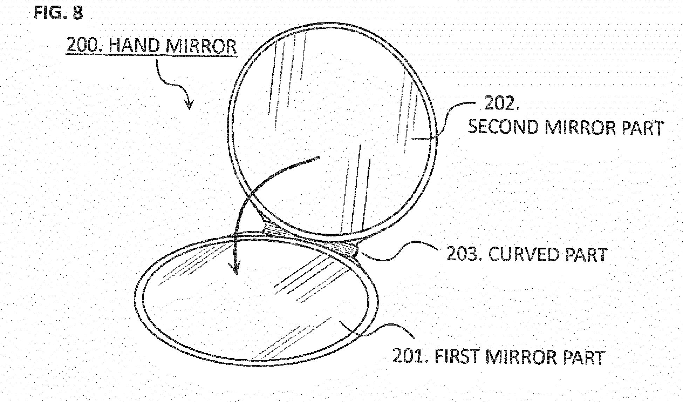

A second application example illustrated in Fig. 8 is a foldable hand mirror 200. The hand mirror 200 has a first mirror part 201 (first member) and a second mirror part 202 (second member) each provided with a mirror surface. Further, the hand mirror 200 has a curved part 203 that linearly connects the first mirror part 201 and the second mirror part 202. The curved part 203 can be deformed such that the first mirror part 201 and the second mirror part 202 pivot with the connection line direction used as an axial direction. Used as the curved part 203 is a silicone rubber tube having a substantially arcuate cross section (opening angle of 0°). The masses of the first mirror part 201 and the second mirror part 202 are designed to be smaller than the stress biasing the first mirror part 201 and the second mirror part 202 in the closing direction.

This foldable hand mirror 200 can be manually opened, and can be automatically closed when a hand is released. As a result, when the hand mirror 200 is dropped, the hand mirror 200 is instantaneously closed, and thus breakage of the mirror surface can be suppressed.

### <Third Application Example: Business Card Holder>

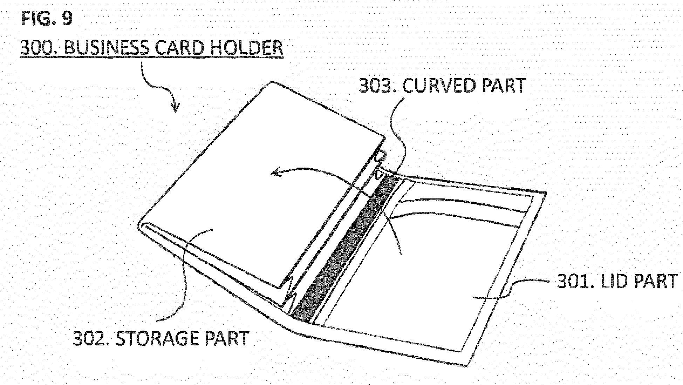

A third application example illustrated in Fig. 9 is a business card holder 300. The business card holder 300 has a storage part 302 (second member) storing business cards and cards and a lid part 301 (first member) covering the storage part 302. Further, the business card holder 300 has a curved part 303 that linearly connects the lid part 301 and the storage part 302. The curved part 303 can be deformed such that the lid part 301 and the storage part 302 pivot with the connection line direction used as an axial direction. Used as the curved part 303 is a silicone rubber tube having a substantially arcuate cross section (opening angle of 0°). It should be noted that as in the case of the smartphone case according to the first application example, plastic (polypropylene (PP)-based) core materials constituting the first member and the second member are fixed to the silicone rubber tube and the silicone rubber tube is covered with a flexible leather-based surface material. The mass of the lid part 301 is designed to be smaller than the stress biasing the lid part 301 and the storage part 302 in the closing direction. The mass of the storage part 302 is designed to be larger than the stress.

In this business card holder 300, the lid part 301 is manually opened, and the lid part 301 is automatically closed when a hand is released. As a result, when the business card holder 300 is dropped, the lid part 301 is instantaneously closed, and thus it is possible to restrain the business cards and the like stored in the storage part 302 from jumping out.

### <Fourth Application Example: Coin Purse>

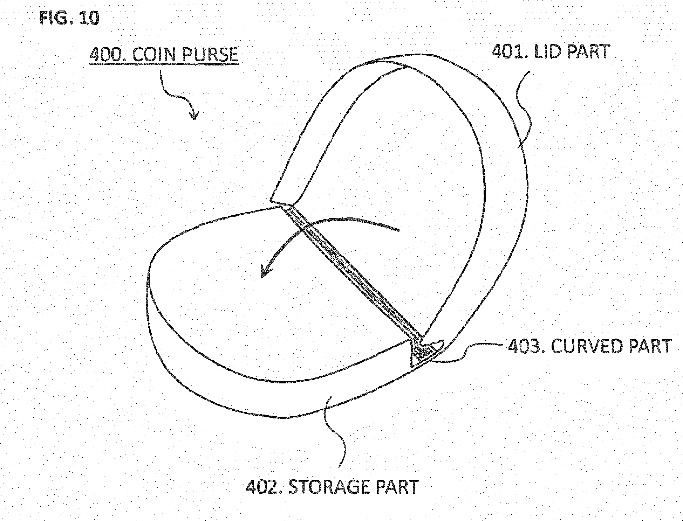

A fourth application example illustrated in Fig. 10 is a coin purse 400. The coin purse 400 has a storage part 402 (second member) storing coins and the like and a lid part 401 (first member) covering the storage part 402. In addition, the coin purse 400 has a curved part 403 that linearly connects the lid part 401 and the storage part 402. The curved part 403 can be deformed such that the lid part 401 and the storage part 402 pivot with the connection line direction used as an axial direction. Used as the curved part 403 is a silicone rubber tube having a substantially arcuate cross section (opening angle of 0°). It should be noted that as in the case of the smartphone case according to the first application example, plastic (polypropylene (PP)-based) core materials constituting the first member and the second member are fixed to the silicone rubber tube and the silicone rubber tube is covered with a flexible leather-based surface material. The masses of the lid part 401 and the storage part 402 are designed to be smaller than the stress biasing the lid part 401 and the storage part 402 in the closing direction.

In this coin purse 400, the lid part 401 is manually opened, and the lid part 401 is automatically closed when a hand is released. As a result, when the coin purse 400 is dropped, the lid part 401 is instantaneously closed, and thus it is possible to restrain the coins and the like stored in the storage part 402 from jumping out.

### <Fifth Application Example: Portable Ashtray>

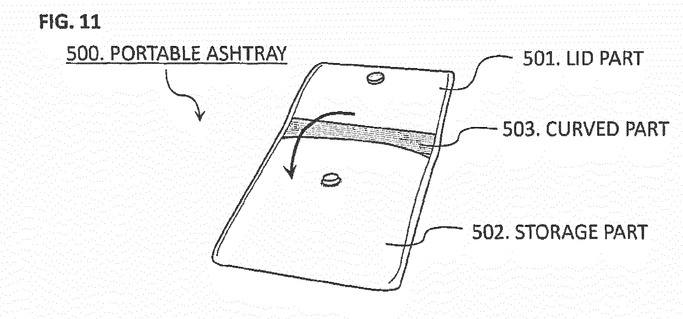

A fifth application example illustrated in Fig. 11 is a portable ashtray 500. The portable ashtray 500 has a storage part 502 (second member) storing ash, cigarette butts, and the like and a lid part 501 (first member) covering the storage part 502. In addition, the portable ashtray 500 has a curved part 503 that linearly connects the lid part 501 and the storage part 502. The curved part 503 can be deformed such that the lid part 501 and the storage part 502 pivot with the connection line direction used as an axial direction. Used as the curved part 503 is a silicone rubber tube having a substantially arcuate cross section (opening angle of 0°). It should be noted that as in the case of the smartphone case according to the first application example, plastic (polypropylene (PP)-based) core materials constituting the first member and the second member are fixed to the silicone rubber tube and the silicone rubber tube is covered with a flexible leather-based surface material. The masses of the lid part 501 and the storage part 502 are designed to be smaller than the stress biasing the lid part 501 and the storage part 502 in the closing direction.

In this portable ashtray 500, the lid part 501 is manually opened, and the lid part 501 is automatically closed when a hand is released. As a result, when the portable ashtray 500 is dropped, the lid part 501 is instantaneously closed, and thus it is possible to restrain the ash, cigarette butts, and the like stored in the storage part 502 from jumping out.

### <Sixth Application Example: Water Bottle>

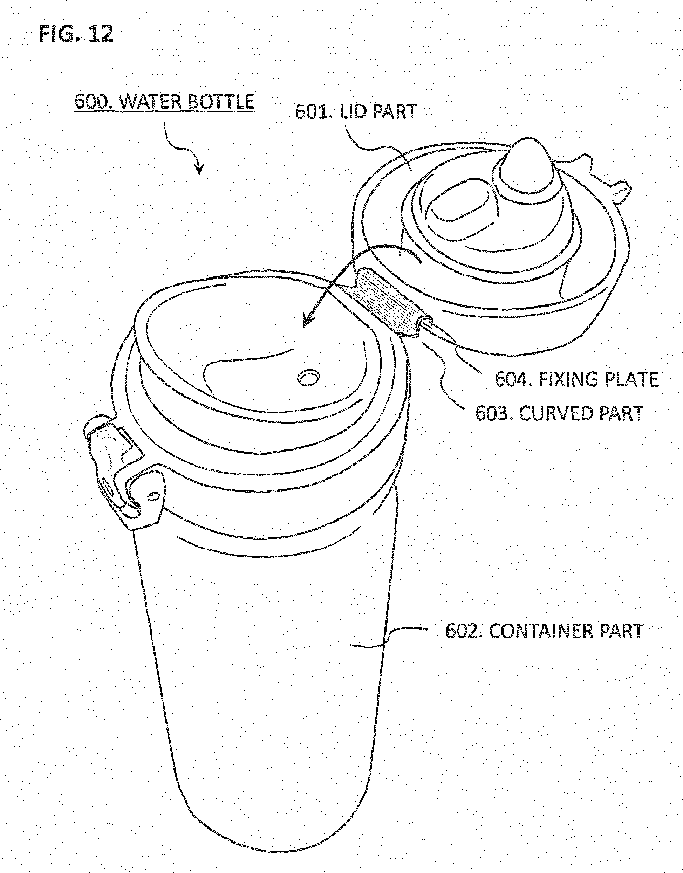

A sixth application example illustrated in Fig. 12 is a water bottle 600. The water bottle 600 has a container part 602 (second member) containing a beverage and the like and a lid part 601 (first member) covering the container part 602. In addition, the water bottle 600 has a curved part 603 that linearly connects the lid part 601 and the container part 602. The curved part 603 can be deformed such that the lid part 601 and the container part 602 pivot with the connection line direction used as an axial direction. Used as the curved part 603 is a silicone rubber tube having a substantially arcuate cross section (opening angle of 0°). It should be noted that the silicone rubber tube is fixed to a plastic (polypropylene (PP)-based) fixing plate 604 and attached to the lid part 601 and the container part 602 via the fixing plate 604. The mass of the lid part 601 is designed to be smaller than the stress biasing the lid part 601 and the container part 602 in the closing direction. The mass of the container part 602 is designed to be larger than the stress.

In this water bottle 600, the lid part 601 is manually opened, and the lid part 601 is automatically closed when a hand is released. As a result, when the water bottle 600 is dropped, the lid part 601 is instantaneously closed, and thus a tap at the upper part of the container part 602 can be covered and an excellent contamination prevention effect can be achieved.

### INDUSTRIAL APPLICABILITY

The hinge according to the invention can be suitably used in, for example, a protector for an article likely to crack or break when dropped, a lid for an article carrying content desired to be prevented from jumping out when dropped, and a lid for an article desired to be prevented from being hygienically contaminated when dropped. For example, the hinge can be used as a smartphone case, a tablet-type computer case, a hand mirror, a business card holder, a card case, a coin purse, a portable ashtray, a lid of a water bottle or baby bottle tap, a lid covering a pacifier, and the like.

### EXPLANATIONS OF LETTERS OR NUMERALS

- 1: FIRST MEMBER
- 2: SECOND MEMBER
- 3: CURVED PART
- 10: HINGE
- 100: SMARTPHONE CASE
- 101: FIRST FLAT PLATE PART
- 102: SECOND FLAT PLATE PART
- 103: CURVED PART
- 104: PROTECTION TARGET HOLDING PART
- 105: SILICONE RUBBER TUBE
- 106, 107: CORE MATERIAL
- 200: HAND MIRROR
- 201: FIRST MIRROR PART
- 202: SECOND MIRROR PART
- 203: CURVED PART
- 300: BUSINESS CARD HOLDER
- 301: LID PART
- 302: STORAGE PART
- 303: CURVED PART
- 400: COIN PURSE
- 401: LID PART
- 402: STORAGE PART
- 403: CURVED PART
- 500: PORTABLE ASHTRAY
- 501: LID PART
- 502: STORAGE PART
- 503: CURVED PART
- 600: WATER BOTTLE
- 601: LID PART
- 602: CONTAINER PART
- 603: CURVED PART
- 604: FIXING PLATE

## Claims

1. A hinge comprising:
a first member;
a second member; and
a curved part linearly connecting the first member and the second member and allowing the first member and/or the second member to pivot by using a line direction of the connection as an axial direction, wherein
the curved part includes a silicone rubber,
the silicone rubber generates strain in an opened state where the first member and the second member are opened and biases the first member and the second member in a closing direction, and
a mass of the first member and/or the second member is smaller than stress biasing the first member and the second member in the closing direction in an opened state where the first member and the second member are opened by 180°.

2. The hinge according to claim 1, wherein the mass of at least one of the first member and the second member is larger than the stress.

3. The hinge according to claim 1, wherein the stress is 1 to 100 g.

4. The hinge according to any one of claims 1 to 3, wherein the silicone rubber is made of a silicone rubber tube having a substantially arcuate cross section.

5. The hinge according to claim 4, wherein the silicone rubber tube has an outer diameter of 6 to 20 mm and a thickness of 0.5 to 5 mm.

6. The hinge according to claim 4, wherein an opening angle of the substantially arcuate cross section is 0 to 90°.
